# EUROPEAN PATENT APPLICATION

(11) **EP 0 551 869 A1**
(43) Date of publication of application: **21.07.1993**
(21) Application number: 93100343.8
(22) Date of filing: 12.01.1993
(51) Int. Cl.: B29D 17/00, B26F 3/00

(54) **Method of and apparatus for producing disc subtrate**

(30) Priority: 14.01.1992 JP 23322/92
(71) Applicant: SONY CORPORATION, Tokyo (JP)
(72) Inventor: Kudo, Junichiro, Shinagawa-ku, Tokyo (JP); Shimizu, Jun, Shinagawa-ku, Tokyo (JP); Kodama, Yoshihiko, Shinagawa-ku, Tokyo (JP)
(74) Representative: TER MEER - MÜLLER - STEINMEISTER & PARTNER

(57) **Abstract**

The method of producing a disc substrate whereby a disc substrate is formed by molding injection, comprises as a first step injection of synthetic resin into a molding cavity (4). Then a moveable member (12) is inserted up to a halfway point in the direction of thickness of the substrate so as to form the main portion of a center hole. Next, the molded disc substrate (20) is taken out of the metal mold (1), and a remaining synthetic resin piece, which is connected with the disc substrate (20) in such a manner as to close the center hole (21), is removed by a technique such as a press (25, 26).

## Description

### BACKGROUND OF THE INVENTION

### 1. Field of the Invention

This invention relates to a method of producing a disc substrates employed for various optical discs, and particularly to an improvement of a method of forming a center hole in case of injection molding.

### 2. Description of the Prior Art

An optical recording system has advantages, such as, excellence in long-term reliability with capability of non-contact recording and reproduction, capability of recording digitized information signals in high density, and excellence in treatment characteristics, and various optical discs are utilized as information memory media in computers, or record media for audio signals and image signals.

For example, in order to make most of the optical recording system, the present applicant has proposed a digital audio system which makes recording/reproduction of audio signals of at least 74 minutes possible, using a small magneto-optical disc with a diameter of 64 mm.

Meanwhile, since this type of optical disc is produced by forming a film of a signal record layer or a reflection layer on the disc substrate of synthetic resin excellent in optical permeability, such as polycarbonate, a technique of molding the substrate with high accuracy is indispensable. Conventionally, molding the disc substrate by injection molding is generally performed in consideration of productivity.

Namely, synthetic resin, such as polycarbonate, molten in a molding cavity constituted correspondingly to the disc form between a movable metal mold and a fixed metal mold, whereby a center hole is formed at once by punching with a punch moving back and forth in the molding cavity by an oil-pressure mechanism.

Here, the center hole is formed by punching on the molded disc substrate, because it is necessary to position correctly the optical disc to be loaded on a disc table by engaging a centering member with the center hole in rotation operation of the optical disc.

Therefore, conventionally punching of the above-mentioned center hole is completed by the steps of arranging the above-mentioned punch in the central part of the movable metal mold while preparing a recess corresponding to this punch in the fixed metal mold, and plunging the above-mentioned punch into the recess of the fixed metal mold, at the time of punching the center hole.

However, in case of employing the method of plunging the above-mentioned punch into the recess of the fixed metal mold, considerably high mechanical accuracy is required of each metal mold. For this reason, problems arise, such as difficulty in maintaining accuracy of concentricity, an rise in the price of the metal mold, and shortening of the life of the metal mold. Particularly, when molding the disc substrate of the optical disc of a small diameter used for the above-mentioned digital audio system, it is desirable to mold two or more disc substrates simultaneously by an injection molding machine for high productivity. However, it is nearly impossible to maintain high accuracy of the above-mentioned concentricity in all punches.

Therefore, a margin (clearance) may be given between the recess of the fixed metal mold and the above-mentioned punch, so as to solve the above-mentioned problems at the expense of mechanical accuracy to some extent. However, if there is a space between the recess of the fixed metal mold and the punch, a large amount of particles of dust will be generated in this space at the time of punching the center hole. The particles may enter into the disc substrate at the time of next injection molding, and may result in defects.

### OBJECTS AND SUMMARY OF THE INVENTION

Accordingly, it is an object of the present invention to provide a method of producing a disc substrate with which a center hole can be formed without generating dust while the disc substrate can be molded with high accuracy.

It is another object of the present invention to provide a method of producing a disc substrate with which the production cost can be reduced by relaxing the mechanical accuracy required of a metal mold the simplifying the construction of an apparatus.

According to the present invention, there is provided a method of producing a disc substrate formed by molding synthetic resin while having a center hole penetrating in the direction of thickness thereof, comprising the steps of forming a center hole by entering a movable member up to a halfway part in a direction of thickness of the substrate after injecting synthetic resin into a molding cavity of a metal mold, extracting the molded disc substrate from the metal mold, and removing a synthetic resin piece remaining in the center hole.

In the present invention, the punch is not plunged into the recess of the metal mold on the opposite side, but the movable member corresponding to the punch is inserted up to the halfway part in the direction of thickness of the disc substrate. Therefore, high mechanical accuracy is not required of the metal mold, and maintenance of concentricity is not necessary, either. Naturally, there is no possibility that dust may be generated. In addition, since a main portion of the center hole is molded by inserting the above-mentioned movable member, the disc substrate obtained has no problem in accuracy. Besides, since the synthetic resin piece remaining in the center hole is connected with the disc substrate only by a connection portion of slight thickness, the piece is easily removed by techniques, such as a press, thereby causing no trouble at all.

The above and other objects, features and advantages of the present invention will become apparent from the following detailed description which is to be read in conjunction with the accompanying drawings.

### BRIEF DESCRIPTION OF THE DRAWINGS

Fig. 1 is a cross-sectional view showing a process of resin inflow, and shows the construction of a metal-mold device used for a method of the present invention.

Fig. 2 is a cross-sectional view showing a process of forming a center hole by a movable member.

Fig. 3 is a schematic cross-sectional view showing a shape of a disc substrate obtained by injection molding.

Fig. 4 is a principal-part schematic cross-sectional view showing a process of removing a synthetic resin piece closing the center hole.

Fig. 5 is a schematic perspective view, partly broken away, showing a magneto-optical disc using the produced disc substrate.

Fig. 6 is a cross-sectional view showing a state of loading the magneto-optical disc on a disk table.

### DESCRIPTION OF THE PREFERRED EMBODIMENT

Referring to drawings, a concrete embodiment in which the present invention is applied to production of a disc substrate of a magneto-optical disc 64 mm in diameter is explained in detail.

In the present embodiment, the disc substrate is injection-molded by an injection molding machine equipped with a metal-mold device for molding. Therefore, the construction of the metal-mold device used for molding is explained first.

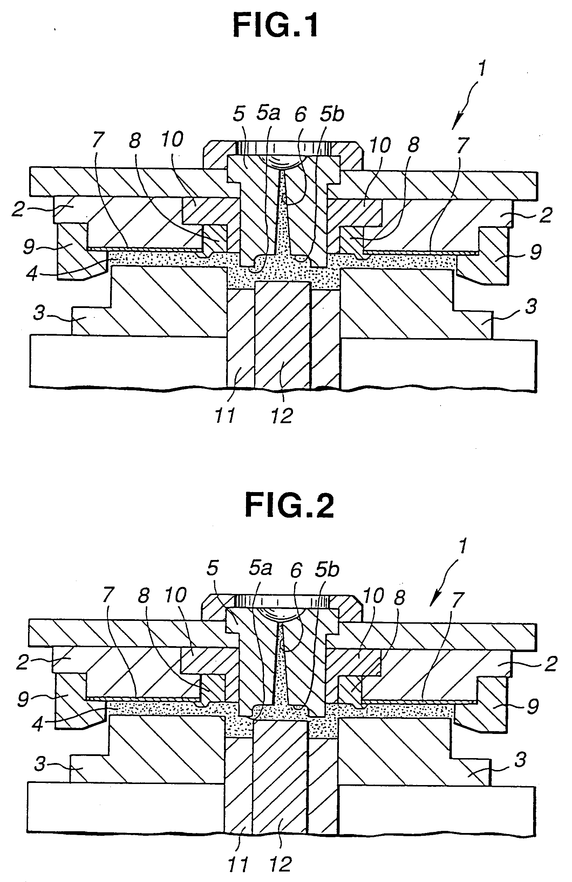

As shown in Fig. 1, a metal-mold device 1 used for molding is constituted of a fixed metal mold 2 and a movable metal mold 3. Between the fixed metal mold 2 and the movable metal mold 3, a molding cavity 4 corresponding to the external shape of a disc substrate to be molded is constructed in a divided state.

A sprue bush 5 is arranged in the center of the molding cavity 4 on the side of the fixed metal-mold 2, the sprue bush 5 leading molten polycarbonate resin supplied from a cylinder into the above-mentioned molding cavity 4.

A resin inflow port 6 as a passage for molten resin is opened in the center of the above-mentioned sprue bush 5. Accordingly, polycarbonate resin supplied from the cylinder flows into the molding cavity 4 from the resin inflow port 6.

The tip side of the sprue bush 5 is projected a little further into the molding cavity 4 than other portions of the fixed metal mold 2. Accordingly, a metal plate mounting recess is molded on the disc substrate by the tip side 5a of the sprue bush 5.

Furthermore, a circular recess 5b is formed on the tip side of the sprue bush 5, with the above-mentioned resin inflow port 6 centering thereon. This recess 5b functions as a buffer for pressure applied to the resin when a movable member to be described later is moved forward. Since the movable member does not plunge into the recess 5b, high processing accuracy is not demanded in processing.

A stamper 7 for molding a pre-groove and a pre-pit is attached on the surface of the side constituting the molding cavity 4 of the fixed metal mold 2, by supporting an inner peripheral side and an outer peripheral side with stamper holders 8 and 9, respectively.

Meanwhile, the stamper holder 8 supporting the inner peripheral side of the stamper 7 is attached and fixed, by fitting, to a stamper holder support 10 arranged by fitting to the sprue bush 5, while the stamper holder 9 supporting the outer peripheral side of the stamper 7 is attached and fixed, by fitting, to the outer peripheral surface of the fixed metal mold 2.

On the other hand, a ring-shaped insert die 11 for projection molding having a diameter larger than that of the sprue bush 5 prepared in the fixed metal mold 2 is arranged in the central part of the movable metal mold 3 arranged in a position opposite to the fixed metal mold 2, in a state of being slightly retracted from the movable metal mold 3.

A cylindrical movable member 12 is arranged on the inner peripheral side of the insert die 11. This movable member 12 has an outer diameter size corresponding to an inner diameter size of the center hole formed on the disc substrate. This movable member is mounted to be freely movable back and forth in the molding cavity 4 independently of the movable metal mold 3 and the insert die 11.

In order to form the disk substrate by using the injection molding machine having the above-mentioned construction, firstly the molten polycarbonate resin supplied from the cylinder is poured into the molding cavity 4 from the resin inflow port 6 of the sprue bush 5, as shown in Fig. 1.

At this time, the movable member 12 prepared in the movable metal mold 3 is in a retracted state, and the molding cavity 4 in this portion is expanded, whereby a pass in the vicinity of the sprue bush 5 is secured. Accordingly, the movable member 12 does not hinder the resin inflow, so that the resin inflow operation is performed smoothly.

Next, the movable member 12 is advanced to a position slightly before it touches the sprue bush 5, that is, to a halfway part in the direction of thickness of the disc substrate, thereby forming the main portion of the center hole, as shown in Fig.2.

Here, since the movable member 12 is not plunged into the fixed metal mold 2, there is no risk of generating dust due to damages and a space created by a collision even when there is some deviation in concentricity. For this reason, the movable member 12 does not need to maintain concentricity with the circular recess 5b prepared in the sprue bush 5 and high mechanical accuracy.

Meanwhile, it is possible to make an advanced position of the movable member 12 flush with the tip surface 5a of the sprue bush 5, so that formation of the center hole may be perfect at this stage. However, this is not desirable for the following reasons. That is, mechanical control for the movable member 12 to correspond perfectly to the tip side 5a of the sprue bush 5 is extremely difficult, and therefore, troubles such as a collision between the movable member 12 and the sprue bush 5 cannot be avoided. In addition, even though the advanced position of the movable member 12 may correspond to the tip surface 5a of the sprue bush 5, there is a high possibility that the resin of the center hole may be left uncut because the metal mold is opened by a hundred and tens of µm to tens of µm by injection pressure when molding the disc substrate. Therefore, it is difficult to form a perfect center hole.

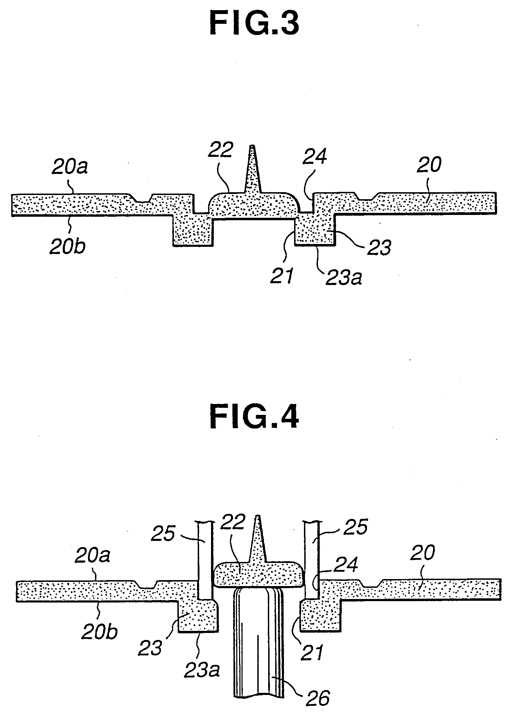

After the injection molding of the disc substrate by the above-mentioned technique, the molded disc substrate is taken out from the metal mold. The disc substrate taken out of the metal mold is shown in Fig. 3.

The molded disc substrate 20 has a shape of disc, and has a pre-groove or a pre-pit formed on one main surface 20a thereof, by the stamper 7 attached to the fixed metal mold 2. Accordingly, a signal record layer is formed on the main surface 20a in a process mentioned below.

Also, a main surface 20b on the other side of the disc substrate 20 becomes a signal read-out surface to which an optical beam from an optical head is irradiated when constituting a magneto-optical disc.

A center hole 21 is formed in the central part of the disc substrate 20 by the movable member 12.

This center hole 21, with which a centering member arranged in the rotation center of a disc table is engaged when rotating the magneto-optical disc so as to carry out alignment of the magneto-optical disc, is formed with high accuracy by the movable member 12.

At this stage, however, a synthetic resin piece 22 having a shape corresponding to the inflow port 6 and the recess 5b of the sprue bush 5 remains in such a way as to close the center hole 21.

This is because the center hole 21 is formed not by plunging the movable member 12 into the opposite metal mold (the fixed metal mold 2) but by inserting the movable member 12 up to the halfway part in the direction of thickness of the disk substrate 20. Accordingly, the synthetic resin piece 22 remains connected to the side of the one main surface 20a of the disc substrate 20 via a connecting portion 22a having a slight thickness.

Also, a ring-shaped projection 23 is prepared, surrounding the center hole 21, on the side of the other main surface 20b facing the one main surface 20a with the signal record layer formed thereon of the disc substrate 20. The tip surface 23a of the projection 23, which becomes a mounting standard surface accurately positioning a mounting height onto the disk table, is surfaced precisely by the insert die 11.

Furthermore, a metal plate attachment recess 24 to which a metal plate for magnet chucking fits is prepared by the tip surface 5a of the sprue bush 5, in such a manner as to surround the center hole 21, on the one main side 20a with the signal record layer of the disc substrate 20 formed thereon.

As described above, the synthetic resin piece 22 remains on the injection-molded disc substrate 20, closing the center hole 21.

Then, the remaining synthetic resin piece 22 is removed by using a pressing machine, as shown in Fig. 4. Namely, the main surface 20a of the disc substrate 20 is held by, for example, a holder 25 touching the metal plate attachment recess 24, and then punched by a punch 26 from the side of the other main surface 20b.

At this time, the synthetic resin piece 22 is connected to the disc substrate 20 only by the connecting portion 22a having a slight thickness, and therefore can be easily punched out for removal.

Meanwhile, accuracy of the center hole 21 in the vicinity of the connecting portion 22a may decline, because of punching of the synthetic resin piece 22. However, since it is on the main surface 20b on the opposite side of the center hole 21 that the centering member of the disk table engages with the center hole, accurate alignment and positioning are not hindered.

By removing the synthetic resin piece 22, the disc substrate 20 with the center hole 21 penetrating in the direction of thickness is completed in this manner.

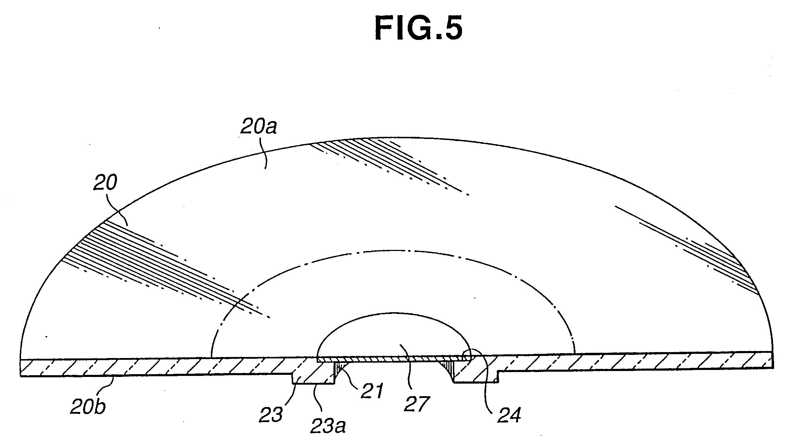

The signal record layer such as a TbFeCo layer having magneto-optical effects, a reflection film, and a protection film, not shown, are formed on the one main surface 20a of the disc substrate 20, while a thin metal plate 27 is fitted to and arranged into the recess 24 so as to close the center hole 21, as shown in Fig.5. In this way, a magneto-optical disc 30 is constituted.

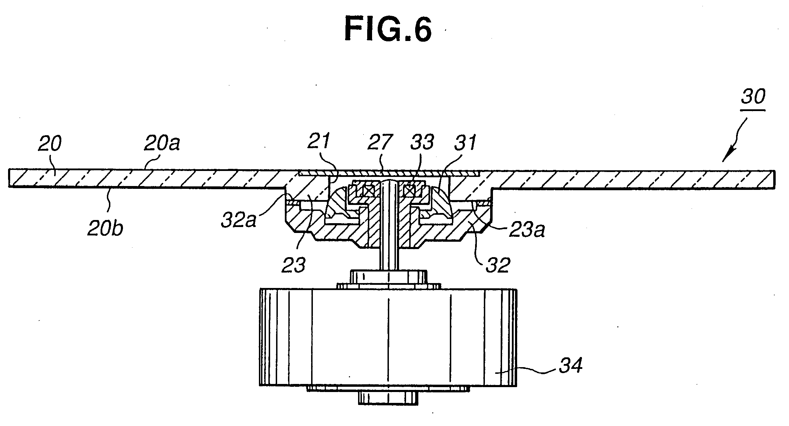

The magneto-optical disc 30 having the above-mentioned constitution is loaded in a state of being positioned accurately on the disk table 32 having a motor 34 for rotation drive in the following manner. That is, as shown in Fig.6, the center hole 21 of the disc substrate 20 engages with a centering member 31 while a disc supporting surface 32a of a disc table 32 supports the tip surface 23a (mounting standard surface) of the projection 23, and furthermore, a magnet 33 attracts the metal plate 27 thereto.

Though the method of forming the disc substrate applied to the magneto-optical disc is explained in the above embodiment, the method of the present invention is not limited to the above embodiment, and can be applied broadly to production of a disk substrate of a disc having a center hole.

## Claims

1. A method of producing a disc substrate formed by molding synthetic resin while having a center hole penetrating in a direction of thickness thereof, comprising the steps of
forming the center hole on a molded disc substrate by entering a moveable member (12) up to a halfway part in the direction of thickness of said substrate after injecting synthetic resin into a molding cavity (4) of a metal mold (1), and
removing a synthetic resin piece (22) remaining in said center hole (21) after extracting the molded disc substrate (20) from said metal mold.

2. An apparatus for producing a disc substrate (20), comprising metal molds (1) composed of a fixed metal mold (2) and a moveable metal mold (3),
a sprue bush (5) arranged on a side of said fixed metal mold (2), said sprue bush having a resin inflow port (6) opened in a center of a cavity (4) while having a tip side (5a) projected further into said cavity (4) than other portions thereof, and
a moveable member (12) arranged in a central part of said moveable metal mold (3), said moveable member (12) having an outer diameter size corresponding to an inner diameter size of said center hole formed on said disc substrate.

3. An apparatus for producing a disc substrate according to claim 2, wherein a circular recess is formed on the tip side (5a) of said sprue bush (5), with the resin inflow port (6) positioned in the center thereof.

4. An apparatus for producing a disc substrate according to claim 2, wherein an insert die (11) for projection molding having a diameter greater than a diameter of said sprue bush (5) is arranged in the central part of said moveable metal mold (3), in a state of being retracted from said moveable metal mold (3), and wherein said moveable member (12) is arranged in a central part of said insert die (11).
